# EUROPÄISCHE PATENTANMELDUNG

(11) **EP 2 690 687 A1**
(43) Veröffentlichungstag der Anmeldung: **29.01.2014**
(21) Anmeldenummer: 12177971.4
(22) Anmeldetag: 26.07.2012
(51) Int. Cl.: H01M 4/06, H01M 4/24, H01M 4/42, H01M 10/28, H01M 12/06, H01M 2/02, H01M 6/10, H01M 4/74, H01M 4/12, H01M 6/08

(54) **Knopfzelle mit Anodenwickel und Verfahren zu ihrer Herstellung**

(71) Anmelder: VARTA Microbattery GmbH, 73479 Ellwangen (DE)
(72) Erfinder: Brenner, Rolf, 73479 Ellwangen (DE); Gaugler, Winfried, 73479 Ellwangen (DE); Krebs, Martin, 73494 Rosenberg (DE)
(74) Vertreter: Patentanwälte Ruff, Wilhelm, Beier, Dauster & Partner

(57) **Zusammenfassung**

Die Erfindung betrifft eine Knopfzelle, umfassend
- zwei metallische Gehäusehalbteile in Form eines Becherteils und eines Deckelteils, die mittels einer elektrisch isolierenden Dichtung von einander getrennt sind und die ein flüssigkeitsdicht verschlossenes Gehäuse mit einem ebenen Bodenbereich und einem dazu parallelen ebenen Deckelbereich ausbilden, sowie
- innerhalb des Gehäuses eine Anode aus Zink oder einem zinkhaltigen Material und eine Kathode,

wobei die Anode in Form eines Wickels ausgebildet ist, dessen Stirnseiten in Richtung des ebenen Bodenbereichs und des ebenen Deckelbereichs weisen, wobei der Anodenwickel innerhalb des Gehäuses axial verpresst bzw. komprimiert vorliegt.

Weiterhin betriff die Erfindung ein Verfahren zur Herstellung einer Knopfzelle, bei welchem aus zwei metallischen Gehäusehalbteilen in Form eines metallischen Becherteils und metallischen Deckelteils ein Gehäuse mit einem ebenen Bodenbereich und einem dazu parallelen ebenen Deckelbereich montiert wird und eine Anode aus Zink oder einem zinkhaltigen Material in Form eines vorzugsweise vorgefertigten Wickels derart in das Gehäuse eingesetzt wird, dass der Wickel nach flüssigkeitsdichtem Verschluss des Gehäuses axial gepresst bzw. komprimiert innerhalb des Gehäuses vorliegt.

## Beschreibung

Die vorliegende Erfindung betrifft eine Knopfzelle mit Anodenwickel sowie ein Verfahren zur Herstellung einer solchen Knopfzelle.

Knopfzellen weisen üblicherweise ein Gehäuse aus zwei Gehäusehalbteilen, einem Gehäusebecher und einem Gehäusedeckel, auf. Diese können beispielsweise aus vernickeltem Tiefziehblech als Stanzziehteile hergestellt werden. Gewöhnlich ist der Gehäusebecher positiv und der Gehäusedeckel negativ gepolt.

Ein Beispiel für Knopfzellen stellen Zink-Knopfzellen, d.h. Knopfzellen mit einer Anode aus Zink oder einem zinkhaltigen Material, dar.

Die Herstellung von Zink-Knopfzellen ist jedoch mit diversen Nachteilen behaftet.

In der Regel wird das Zink volumetrisch in Form eines Pulvers oder in Form einer Paste zudosiert. Nachteilig im Falle von Zinkpulver ist dessen chargenabhängige Rieselfähigkeit sowie Kornverteilung, die große Dosiertoleranzen bedingen. Bei der Zudosierung einer Zinkpaste besteht dagegen das Risiko eines Strangabrisses.

Weitere Probleme können sich in der Praxis daraus ergeben, dass ein flüssiger Elektrolyt von dem Zinkpulver oder der Zinkpaste nur unvollständig aufgenommen werden.

Obendrein muss in der Regel ein Zentrifugieren durchgeführt werden, um das Zink möglichst nahe an eine Kathode zu positionieren.

Die vorstehend beschriebenen Probleme erschweren bzw. verkomplizieren eine Massenherstellung von Zink-Knopfzellen und haben insbesondere zur Folge, dass das Zink das hierfür vorgesehene Innenvolumen einer Knopfzelle in der Regel nur zu ca. 70% ausfüllt.

Die Verwendung eines Zinkwickels bei Zink-Quecksilberoxid-Knopfzellen ist bekannt (McGraw-Hill HANDBOOKS: Handbook of batteries, Thirs edition, David Linden, Thomas B. Reddy, ISBN 0-07-135978-8).

Hierdurch lassen sich indes die oben genannten Probleme allenfalls teilweise beheben. So verbleibt insbesondere das Problem einer möglichst dichten Positionierung der Anode an der Kathode. Weitere Probleme können aus einer unerwünschten Verrutschung des Zinkwickels innerhalb des Gehäuses resultieren.

Vor diesem Hintergrund liegt der vorliegenden Erfindung daher die Aufgabe zugrunde, eine Knopfzelle bereitzustellen, bei der die oben angesprochenen Probleme nicht oder nur in stark verringertem Maß auftreten. Insbesondere soll die erfindungsgemäße Knopfzelle eine einfachere und reproduzierbarere Massenfertigung erlauben.

Diese Aufgabe wird gelöst durch eine Knopfzelle mit den Merkmalen des unabhängigen Anspruchs 1 sowie durch ein Verfahren mit den Merkmalen des Anspruchs 13. Bevorzugte Ausführungsformen der erfindungsgemäßen Knopfzelle sowie des erfindungsgemäßen Verfahrens sind in den abhängigen Ansprüchen 2 bis 12 sowie 14 definiert. Der Wortlaut sämtlicher Ansprüche wird hiermit durch Bezugnahme zum Inhalt dieser Beschreibung gemacht.

Die erfindungsgemäße Knopfzelle umfasst stets zwei metallische Gehäusehalbteile, die durch eine elektrisch isolierende Dichtung voneinander getrennt sind und die ein insbesondere flüssigkeitsdichtes Gehäuse mit einem ebenen oder im Wesentlichen ebenen Bodenbereich und einem dazu in der Regel parallelen ebenen oder im Wesentlichen ebenen Deckelbereich ausbilden. Bei den beiden Gehäusehalbteilen handelt es sich in der Regel um ein metallisches Becherteil und ein metallisches Gehäuseteil.

Innerhalb des Gehäuses umfasst die Knopfzelle eine Anode und eine Kathode. Die Anode besteht in der Regel aus Zink oder einem zinkhaltigen Material.

Unter einem zinkhaltigen Material soll im Sinne der vorliegenden Erfindung ein Material verstanden werden, welches neben Zink, welches den Hauptbestandteil des Materials bilden kann, weitere Komponenten wie beispielsweise Binde- bzw. Geliermittel, Träger bzw. Matrices, insbesondere für Zink bzw. etwaige Binde- bzw. Geliermittel, aufweisen kann. Hierauf wird im Folgenden jedoch noch näher eingegangen werden.

Im Gegensatz zu den eingangs erwähnten Knopfzellen zeichnet sich die erfindungsgemäße Knopfzelle bevorzugt dadurch aus, dass die Anode in Form eines Wickels, nachfolgend auch als Anodenwickel bezeichnet, ausgebildet ist, der innerhalb des Gehäuses axial, d.h. in axialer Richtung (bzw. entlang einer gedachten Verbindungsgerade durch die Mittelpunkte der Stirnseiten des Anodenwickels), gepresst oder verpresst bzw. komprimiert vorliegt.

In der Regel weisen die Stirnseiten des Anodenwickels in Richtung des Boden- und Deckelbereichs des Gehäuses. Zudem kann die axiale Pressung oder Verpressung bzw. Kompression des Anodenwickels insbesondere radiale Deformationen, beispielsweise Erweiterungen, der Wickelstruktur bewirken.

Unter einem Wickel soll im Sinne der vorliegenden Erfindung bevorzugt ein Formkörper verstanden werden, der mittels Aufwickeln oder Aufrollen eines vorzugsweise band- oder streifenförmigen, insbesondere rechteckförmigen, Flachkörpers, auf welchen im Folgenden noch näher eingegangen werden wird, herstellbar ist.

Dadurch, dass sich der Anodenwickel innerhalb des Knopfzellengehäuses, in der Regel zwischen Deckelteil und Kathode, in einem axial gepressten bzw. komprimierten Zustand befindet, ist eine unerwünschte Verrutschung des Anodenwickels innerhalb des Gehäuses nicht mehr möglich.

Die axiale Pressung bzw. Kompression ermöglicht insbesondere eine dauerhafte und vor allem dichte Positionierung des Anodenwickels an der Kathode. Ein aufwendiges Zentrifugieren zur Positionierung der Anode an der Kathode entfällt somit.

Weiterhin erlaubt die axiale Pressung bzw. Kompression des Anodenwickels dessen direkte und ebenso dauerhafte Kontaktierung mit dem Deckelteil, das vorzugsweise als Ableiter wirkt, so dass zumindest insoweit auf einen Ableiter in Form eines separaten Bauteils verzichtet werden kann.

Ein weiterer Vorteil besteht darin, dass sich der Anodenwickel leichter und exakter innerhalb des Knopfzellengehäuses positionieren lässt und zur Herstellung des Wickels ein Flachkörper mit definierten Dimensionen, insbesondere mit definierter Breite, und definierter Homogenität verwendet werden kann. Hierdurch lässt sich die Herstellung einer Knopfzelle besser standardisieren und insbesondere reproduzieren, was für eine Massenherstellung der Knopfzelle von unschätzbarem Vorteil ist.

Insbesondere ist nur die Anode in Form eines Wickels ausgebildet, der innerhalb des Gehäuses in gepresster bzw. komprimierter Form vorliegt.

In einer bevorzugten Ausführungsform weist der Anodenwickel zwischen seinen Windungen Spalten auf. Die Spalten können insbesondere dadurch entstehen, dass der Anodenwickel nach seiner Herstellung etwas "aufspringt". Die Spalten beschleunigen mit besonderem Vorteil die Aufnahme eines Elektrolyten und tragen dazu bei, dass der Elektrolyt über die Spalten des Wickels sofort gebunden wird.

Die erfindungsgemäße Knopfzelle enthält üblicherweise einen wässrigalkalischen Elektrolyten wie beispielsweise eine wässrige Natriumhydroxid- oder Kaliumhydroxidlösung.

Der Anodenwickel liegt in einer bevorzugten Ausführungsform spiralförmig vor.

Vorzugsweise weist der Anodenwickel vor dem Verschluss des Gehäuses die Form oder im Wesentlichen die Form eines Zylinders, insbesondere Kreiszylinders, auf. Hiervon kann die Form des Anodenwickels jedoch nach Verschluss des Knopfzellengehäuses aufgrund der durch den Verschluss in axialer Richtung des Wickels bedingten Pressung bzw. Kompression abweichen. So kann der Anodenwickel insbesondere in Form eines vorzugsweise in radialer Richtung deformierten Zylinders, insbesondere Kreiszylinders, vorliegen.

In einer besonders bevorzugten Ausführungsform ist die Anode in Form eines Rundwickels ausgebildet. Nach Verschluss des Gehäuses kann die Anode insbesondere in Form eines in radialer Richtung deformierten Rundwickels vorliegen.

Erfindungsgemäß bevorzugt ist es weiterhin, wenn der Anodenwickel, vorzugsweise koaxial, im Gehäusedeckel der Knopfzelle enthalten ist.

Der Anodenwickel wird in einer weiteren bevorzugten Ausführungsform mittels Aufwickeln eines band- oder streifenförmigen und insbesondere flexiblen Flachkörpers hergestellt.

Der Flachkörper kann eine Länge zwischen 10 mm und 1000 mm, insbesondere 20 mm und 500 mm, bevorzugt 15 mm und 75 mm, besitzen.

Der Flachkörper kann weiterhin eine Breite zwischen 2 mm und 20 mm, insbesondere 3 mm und 10 mm, bevorzugt 4 mm und 6 mm, besitzen.

Des Weiteren kann der Flachkörper eine Höhe zwischen 0.1 mm und 3 mm, insbesondere 0.2 mm und 1.4 mm, bevorzugt 0.3 mm und 0.7 mm, besitzen.

Bevorzugt besitzt der Flachkörper vor dem Verschluss des Gehäuses eine Breite, die länger ist als der Abstand zwischen dem Deckelbereich des Gehäuses und einer vorzugsweise flach im Bodenbereich und insbesondere parallel zum Bodenbereich angeordneten Kathode.

In einer besonders bevorzugten Ausführungsform besitzt der Flachkörper vor dem Verschluss des Gehäuses eine Breite, die länger ist als der Abstand zwischen dem Deckelbereich des Gehäuses und einem vorzugsweise flach im Bodenbereich und insbesondere parallel zum Bodenbereich angeordneten Separator, der eine darunter liegende, vorzugsweise ebenfalls flach und insbesondere parallel zum Bodenbereich angeordnete, Kathode von dem Anodenwickel beabstandet.

In einer weitergehenden Ausführungsform ist die Breite des Flachkörpers um 0.1 bis 3 %, insbesondere 0.5 bis 2 %, bevorzugt 1 bis 1.5 %, länger als der im letzten bzw. vorletzten Absatz beschriebene Abstand zwischen dem Deckelteil und der Kathode bzw. dem Separator.

Bei dem Anodenwickel, insbesondere Flachkörper, handelt es sich vorzugsweise um ein Band oder eine Folie.

In einer bevorzugten Ausführungsform besteht der Anodenwickel bzw. der zu seiner Herstellung verwendete Flachkörper aus einer Zinkfolie oder einer zinkhaltigen Folie.

In einer weiteren Ausführungsform weist der Anodenwickel bzw. der zu seiner Herstellung verwendete Flachkörper ein vernetztes, insbesondere mittels Pressen oder Sintern vernetztes, Zinkpulver auf. Erfindungsgemäß kann der Anodenwickel bzw. der Flachkörper auch aus einem solchen Zinkpulver bestehen.

Um die Aufnahme eines Elektrolyten zu erleichtern bzw. zu beschleunigen, kann es erfindungsgemäß weiterhin vorgesehen sein, dass der Anodenwickel bzw. der zu seiner Herstellung verwendete Flachkörper neben Zink ein Binde- bzw. Geliermittel aufweist, insbesondere aus Zink und einem Binde- bzw. Geliermittel besteht. Beispielsweise kann der Anodenwickel bzw. der Flachkörper eine Zinkpaste aus Zinkpulver und einem Binde- bzw. Geliermittel aufweisen, insbesondere aus einer solchen Zinkpaste bestehen.

Bevorzugt weist der Anodenwickel bzw. der zu seiner Herstellung verwendete Flachkörper einen Anteil an Binde- bzw. Geliermittel zwischen 0.1 Gew.-% und 5 Gew.-%, insbesondere 0.3 Gew.-% und 2 Gew.-%, bevorzugt 0.5 Gew.-% und 1 Gew.-%, auf, bezogen auf das Gesamtgewicht eines vorzugsweise elektrolytfreien Anodenwickels bzw. des Flachkörpers.

Geeignete Binde- bzw. Geliermittel können ausgewählt sein aus der Gruppe bestehend aus Cellulose bzw. Cellulosederivate, insbesondere Carboxymethylcellulose bzw. Carboxymethylcellulosederivate, Polyvinylalkohol (PVA), Dextrine und Mischungen davon.

In einer weiteren Ausführungsform weist der Anodenwickel bzw. der zu seiner Herstellung verwendete Flachkörper Zink, einen Träger bzw. eine Matrix und vorzugsweise ein Binde- bzw. Geliermittel auf. Insbesondere kann der Anodenwickel bzw. der Flachkörper aus Zink, einem Träger bzw. einer Matrix und vorzugsweise einem Binde- bzw. Geliermittel bestehen. Der Träger bzw. die Matrix ist dabei vorzugsweise als Träger bzw. Matrix für das Zink und das Binde- bzw. Geliermittel vorgesehen, insbesondere für eine aus Zinkpulver und einem Binde- bzw. Geliermittel bestehende Zinkpaste.

Bevorzugt besitzt der Träger bzw. die Matrix Hohlräume, insbesondere Poren oder Kavitäten, welche die Aufnahme des Zinks und insbesondere des Binde- bzw. Geliermittels, insbesondere einer Zinkpaste aus Zinkpulver und einem Binde- bzw. Geliermittel, erleichtern.

Bevorzugt ist der Träger bzw. die Matrix in Form eines faserförmigen Substrats wie beispielsweise eines Gewebes oder Vlieses ausgebildet.

In einer alternativen Ausführungsform ist der Träger bzw. die Matrix in Form eines Streckgitters, insbesondere Streckmetalls, vorzugweise aus Zink, ausgebildet. Unter einem Streckgitter, insbesondere Streckmetall, soll im Sinne der vorliegenden Erfindung ein Werkstoff, insbesondere ein metallischer Werkstoff, mit Öffnungen in der Oberfläche verstanden werden, wobei die Öffnungen durch versetzte Schnitte ohne Materialverlust unter gleichzeitig streckender Verformung erzeugt werden. Die Öffnungen sind in der Regel maschenförmig ausgebildet und können beispielsweise in Form von Rautenmaschen, Langstegmaschen, Sechseckmaschen, Rundmaschen, Quadratmaschen oder dergleichen vorliegen.

In der Regel ist der Anodenwickel über einen Separator von der Kathode beabstandet. Der Separator kann in Form einer Kunststofffolie, insbesondere Polyolefinfolie, ausgebildet sein.

Bei der Kathode der erfindungsgemäßen Knopfzelle kann es sich insbesondere um eine Luftkathode, Braunsteinkathode, Silberoxidkathode oder eine Nickeloxyhydroxidkathode handeln.

Entsprechend kann es sich bei der erfindungsgemäßen Knopfzelle selbst um eine Zink-Luft-Knopfzelle, Zink-Silberoxid-Knopfzelle, Zink-Braunstein-Knopfzelle oder Zink-Nickeloxyhydroxid-Knopfzelle handeln. In Ergänzung oder alternativ zur Anode kann auch die Kathode in Form eines Wickels ausgebildet sein. Mit anderen Worten kann die erfindungsgemäße Knopfzelle prinzipiell einen Anoden- und/oder Kathodenwickel aufweisen, die nach einem in der Regel flüssigkeitsdichten Verschluss des Gehäuses axial ge- oder verpresst bzw. komprimiert innerhalb des Gehäuses vorliegen. Bezüglich weiterer Merkmale und Vorteile zur Form und Geometrie des Kathodenwickels wird auf die entsprechenden, im Zusammenhang mit dem Anodenwickel gemachten Ausführungen Bezug genommen.

Alternativ kann die Anode und/oder Kathode auch in Form eines gefalteten Flachkörpers oder in Form eines Stapels aus übereinander gelegten Flachkörperschichten innerhalb des Gehäuses vorliegen, wobei der gefaltete Flachkörper bzw. der Stapel aus übereinander gelegten Flachkörperschichten axial ge- oder verpresst bzw. komprimiert vorliegt.

Die Elektroden der Knopfzelle sind mit jeweils einem der Gehäusehalbteile elektrisch verbunden. In der Regel sind dabei die Anode mit dem Deckelteil und die Kathode mit dem Becherteil elektrisch verbunden. Die elektrische Verbindung kann über als separate Bauteile vorliegende metallische Ableiter erfolgen. Bei den Ableitern kann es sich beispielsweise um Ableiterfahnen aus Kupfer oder einem anderen geeigneten Material handeln. Elektrodenseitig können die Ableiter beispielsweise an einen Stromkollektor angebunden sein. Eine Anbindung der Ableiter an das Gehäuse und/oder Stromkollektoren kann z.B. über eine Verschweißung oder eine Klemmverbindung erfolgen.

Alternativ können Anode und Kathode auch direkt, d.h. ohne zusätzliche elektrische Kontakte und Verbindungsmittel, mit den Gehäusehalbteilen als Ableiter kontaktiert sein, in der Regel die Anode mit dem Deckelteil und die Kathode mit dem Becherteil.

Becherteil und Deckelteil der erfindungsgemäßen Knopfzelle weisen in der Regel jeweils einen Boden (die Böden von Becher- und Gehäuseteil bilden den Boden- und Deckelbereich des geschlossenen Gehäuses), einen umlaufenden Mantel und insbesondere eine endständige Schnittkante auf. Letztere bildet den Öffnungsrand der Gehäusehalbteile. Zudem können Becher- und Deckelteil jeweils einen den Boden und Mantel verbindenden Randbereich aufweisen.

Der Boden des Becherteils und der Boden des Deckelteils sind bevorzugt jeweils eben und vorzugsweise kreisförmig (oder gegebenenfalls auch oval) ausgebildet. Der Mantel des Becherteils und der Mantel des Deckelteils lassen sich bevorzugt als ringförmige Segmente eines Hohlzylinders mit kreisförmigem Querschnitt (oder gegebenenfalls auch ovalem Querschnitt) beschreiben. Ihre Durchmesser entsprechen bevorzugt entweder exakt denen des dazugehörigen kreisförmigen Bodens oder liegen darüber. In der Regel sind die Mäntel von Becherteil und Deckelteil orthogonal oder im Wesentlichen orthogonal zu den dazugehörigen Böden ausgerichtet.

Die erwähnten Randbereiche von Becherteil und Deckelteil bilden den Übergang zwischen dem Mantel und dem dazugehörigen Boden des Deckelteils oder des Becherteils. Sie umfassen die Bereiche von Becherteil und Deckelteil, die außerhalb der Ebene des jeweiligen Bodens liegen aber noch nicht Teil des dazugehörigen Mantels sind, also insbesondere einen Durchmesser aufweisen, der kleiner ist als der Durchmesser des angrenzenden Mantels. Die Randbereiche können abgerundet ausgebildet sein, eine Schulter besitzen oder auch die Form einer scharfen Kante haben.

Die Gehäusehalbteile sind bevorzugt aus metallischen Materialien wie vernickeltem Stahl oder Blech gefertigt. Weiterhin geeignet sind insbesondere auch Trimetalle, beispielsweise mit der Abfolge Nickel, Stahl (oder Edelstahl) und Kupfer (von außen nach innen).

Der Deckelteil der erfindungsgemäßen Knopfzelle kann in bevorzugten Ausführungsformen mit der oben erwähnten Schnittkante voraus in den Becherteil eingeschoben sein, so dass der Mantel des Becherteils und der Mantel des Deckelteils mindestens bereichsweise überlappen und einen umlaufenden, doppelwandigen Mantelbereich bilden. Die Größe des Überlappungsbereiches bzw. das Verhältnis von überlappendem Bereich zu nicht überlappenden Bereichen ist dabei durch die jeweilige Höhe der Mäntel von Becherteil und Deckelteil sowie durch die Tiefe des Einschubs festgelegt.

Die Dichtung ist zwischen dem Becherteil und dem Deckelteil, insbesondere zwischen den überlappenden Mänteln von Becherteil und Deckelteil, derart angeordnet, dass sie diese voneinander isoliert. Bei der Dichtung handelt es sich bevorzugt um eine Spritzgussdichtung oder um eine Foliendichtung, wie sie beispielsweise in der DE 196 47 593 beschrieben ist. Besonders bevorzugt kommen Foliendichtungen aus einem Thermoplast zum Einsatz. Als Material eignet sich insbesondere Polyamid oder Polyetheretherketon.

Grundsätzlich kann es sich bei der erfindungsgemäßen Zelle um eine Knopfzelle mit Bördelung handeln. Mit anderen Worten kann ein flüssigkeitsdichter Verschluss der erfindungsgemäßen Knopfzelle klassisch durch Umbördeln des Randes des Becherteils über den Rand des Deckelteils, in der Regel in Verbindung mit einem Kunststoffring, der zwischen Becherteil und Deckelteil angeordnet ist und der gleichzeitig als Dichtungselement zur elektrischen Isolierung des Becherteils und des Deckelteils dient, erzielt werden.

Gemäß einer besonders bevorzugten Ausführungsform handelt es sich bei der erfindungsgemäßen Knopfzelle jedoch um eine Knopfzelle ohne Bördelung. Die erfindungsgemäße Knopfzelle weist also in dieser Ausführungsform keinen umgebördelten Becherrand auf. Dabei kann der Zusammenhalt der Gehäusehalbteile entweder auf einer kraftschlüssigen oder formschlüssigen Verbindung beruhen.

Zur Herstellung einer kraftschlüssigen, auf Haftkraft beruhenden, Verbindung zwischen dem Becherteil und dem Deckelteil sind die Höhen der Mäntel von Becherteil und Deckelteil bevorzugt derart aufeinander abgestimmt, dass bei vollständigem Einschub des Deckelteils in das Becherteil ein Umbiegen der oben erwähnten Schnittkante des Becherteils nach innen über den Randbereich des in dem Becherteil eingeschobenen Deckelteils nicht möglich ist. Die Schnittkante des Becherteils liegt bevorzugt auch bei vollständigem Einschub des Deckelteils in den Becherteil an der Außenwand des Mantels des Deckelteils an. Es kann somit auch keine Umbördelung der Schnittkante des Becherteils über den Randbereich des Deckelteils erfolgen.

Der Mantel des Becherteils weist stattdessen in Richtung der Schnittkante bevorzugt einen im Wesentlichen konstanten Innendurchmesser auf. Der Zusammenhalt der Gehäusekomponenten Becherteil, Deckelteil und Dichtung wird also bevorzugt im Wesentlichen nur durch Haftkraft gewährleistet.

Zur Herstellung einer solchen bördelfreien Knopfzelle wird insbesondere auf die WO 2010/089152 A1 Bezug genommen, deren Offenbarungsgehalt insoweit durch ausdrückliche Bezugnahme zum Inhalt der vorliegenden Beschreibung gemacht wird.

Dagegen zeichnet sich eine bördelfreie Knopfzelle, bei der der Zusammenhalt zwischen den Gehäusehalbteilen auf einem Formschluss beruht, bevorzugt dadurch aus, dass sich der Mantel des Deckelteils in einen einwandigen Abschnitt und einen sich daran anschließenden umlaufenden doppelwandigen Öffnungsrand mit U-förmigen Querschnitt unterteilt, der durch radiales Umbiegen der Schnittkante des Deckelteils nach außen gebildet wurde, der Mantel des Deckelteils unmittelbar unterhalb des umlaufenden doppelwandigen Öffnungsrandes eine umlaufende Kerbe aufweist, in der sein Außendurchmesser ein Minimum aufweist und der Mantel des Becherteils eine durch radialen Einzug gebildete umlaufende Nase aufweist, die in diese umlaufende Kerbe eingreift. Die Nase ist dabei bevorzugt von der radial nach innen eingezogenen Schnittkante des Becherteils gebildet. Weiterhin bevorzugt ist es, dass die Nase von einer unterhalb der Schnittkante angeordneten radial umlaufenden Einbuchtung im Mantel des Becherteils gebildet wird. Des Weiteren ist es bevorzugt, dass der Mantel des Becherteils eine Höhe aufweist, die weniger als 60 %, bevorzugt weniger als 40 %, der Höhe der Knopfzelle beträgt. Weiterhin bevorzugt ist es, wenn der Außendurchmesser des Mantels des Deckelteils im einwandigen Abschnitt den maximalen Außendurchmesser des Mantels des Becherteils nicht überschreitet und insbesondere die Dichtung die Außenseite des Mantels des Deckelteils vollständig abdeckt. Bezüglich weiterer Merkmale und Vorteile wird auf die noch unveröffentlichte deutsche Patentanmeldung 10 2011 078 611.2 Bezug genommen.

Das Verhältnis von Höhe zu Durchmesser liegt bei Knopfzellen definitionsgemäß unterhalb von 1. Besonders bevorzugt liegt dieses Verhältnis bei der erfindungsgemäßen Knopfzelle zwischen 0.1 und 0.9, insbesondere zwischen 0.15 und 0.7. Unter der Höhe soll dabei der Abstand zwischen dem ebenen Bodenbereich und dem dazu parallelen ebenen Deckelbereich verstanden werden. Der Durchmesser meint die maximale Entfernung zweier Punkte auf dem Mantelbereich der Knopfzelle.

Ein zweiter Aspekt der vorliegenden Erfindung betrifft ein Verfahren zur Herstellung einer Knopfzelle, insbesondere einer Knopfzelle gemäß der vorliegenden Erfindung.

Hierzu wird aus zwei metallischen Gehäusehalbteilen, in der Regel einem metallischen Becherteil und metallischen Deckelteil, ein Gehäuse mit einem ebenen oder im Wesentlichen ebenen Bodenbereich und einem in der Regel dazu parallelen und ebenso ebenen oder im Wesentlichen ebenen Deckelbereich montiert.

Die Anode, vorzugsweise in Form eines Wickels, nachfolgend auch als Anodenwickel bezeichnet, wird dabei derart in das Gehäuse eingesetzt, dass der Anodenwickel nach Verschluss, insbesondere flüssigkeitsdichtem Verschluss, des Gehäuses axial, d.h. in axialer Richtung, ge- oder verpresst bzw. komprimiert innerhalb des Gehäuses vorliegt. Die Anode besteht dabei aus Zink oder einem zinkhaltigen Material.

In einer bevorzugten Ausführungsform wird der Anodenwickel zunächst in das metallische Deckelteil des Gehäuses eingesetzt und anschließend das metallische Deckelteil mit dem Anodenwickel in das metallische Becherteil eingesetzt. Danach erfolgt vorzugsweise der Verschluss des Gehäuses. Wie bereits erwähnt, kann der Verschluss mittels Bördelung, in der Regel mittels Umbördeln des Randes des Becherteils über den Rand des Deckelteils, oder bördelfrei vorgenommen werden. Insoweit wird vollständig auf die bisherige Beschreibung Bezug genommen.

Zweckmäßigerweise wird nach dem Einsetzen des Anodenwickels in das Deckelteil ein Elektrolyt (in den Anodenwickel) eindosiert. Bei dem Elektrolyten handelt es sich - wie bereits erwähnt - bevorzugt um einen alkalisch-wässrigen Elektrolyten wie beispielsweise eine Natirumhydroxid- oder Kaliumhydroxid-Lösung.

Die Anode wird in einer weiteren Ausführungsform in Form eines bereits vorgefertigten Wickels in das Gehäuse eingesetzt.

Die Herstellung des Anodenwickels erfolgt in zweckmäßigen Ausführungsformen ausgehend von einem Endlos-Flachkörper, bevorzugt ausgehend von einem band- oder streifenförmigen, insbesondere rechteckförmigen, und vorzugsweise flexiblen Endlos-Flachkörper. Bevorzugt handelt es sich bei dem Endlos-Flachkörper um ein Endlos-Band oder eine Endlos-Folie.

Aus dem Endlos-Flachkörper wird in einer weiteren Ausführungsform ein bevorzugt band- oder streifenförmiger, insbesondere rechteckförmiger, Flachkörper ausgeschnitten, insbesondere ausgestanzt. Der ausgeschnittene bzw. ausgestanzte Flachkörper wird anschließend unter Ausbildung des Anodenwickels aufgewickelt bzw. aufgerollt.

Zur Herstellung der Anode wird vorzugsweise ein Endlos-Flachkörper verwendet, dessen Breite vor dem Verschluss des Gehäuses länger ist als der Abstand zwischen dem Deckelbereich des Gehäuses und einer vorzugsweise flach im Bodenbereich und insbesondere parallel zum Bodenbereich angeordneten Kathode.

In einer weiteren Ausführungsform wird ein Endlos-Flachkörper verwendet, dessen Breite vor dem Verschluss des Gehäuses länger ist als der Abstand zwischen dem Deckelbereich des Gehäuses und einem vorzugsweise flach im Bodenbereich und parallel zum Bodenbereich angeordneten Separator, der eine darunter liegende, vorzugsweise ebenfalls flach und insbesondere parallel zum Bodenbereich angeordnete, Kathode von dem Anodenwickel beabstandet.

In Ergänzung oder alternativ zur Anode kann auch die Kathode in Form eines Wickels ausgebildet sein und derart in das Gehäuse eingesetzt werden, dass der Kathodenwickel nach Verschluss, insbesondere flüssigkeitsdichtem Verschluss, des Gehäuses axial, d.h. in axialer Richtung, ge- oder verpresst bzw. komprimiert innerhalb des Gehäuses vorliegt.

Alternativ kann die Anode in Form eines gefalteten Flachkörpers oder eines Stapels aus übereinander gelegten Flachkörperscheiben derart in das Gehäuse der Knopfzelle eingesetzt werden, dass der gefaltete Flachkörper bzw. der Stapel axial ge- oder verpresst bzw. komprimiert innerhalb des Gehäuses vorliegt.

Bezüglich weiterer Merkmale und Vorteile des Verfahrens, insbesondere hinsichtlich des Gehäuses, der Anode und/oder der Kathode, wird vollständig auf die bisherige sowie die noch folgende Beschreibung Bezug genommen.

Neben den genannten ergeben sich weitere Vorteile der Erfindung aus der nun folgenden Beschreibung der Zeichnungen in Verbindung mit den Unteransprüchen. Dabei können die einzelnen Merkmale der Erfindung für sich allein oder in Kombination miteinander verwirklicht sein. Die beschriebenen Ausführungsformen dienen lediglich zur Erläuterung und zum besseren Verständnis der Erfindung und sind in keiner Weise einschränkend zu verstehen.

### Figurenbeschreibung

- Figur 1: zeigt schematisch eine geschnittene Darstellung einer bevorzugten Ausführungsform einer erfindungsgemäßen Knopfzelle,
- Figur 2a: zeigt schematisch die Seitenansicht eines Teils einer erfindungsgemäßen Knopfzelle,
- Figur 2b: zeigt schematisch die Draufsicht des in Figur 2 dargestellten Teils einer erfindungsgemäßen Knopfzelle,
- Figur 3a: zeigt schematisch eine geschnittene Darstellung einer weiteren bevorzugten Ausführungsform einer erfindungsgemäßen Knopfzelle,
- Figur 3b: zeigt schematisch eine ausschnittsweise Vergrößerung des geschnittenen Bereichs in Fig. 3a und
- Figur 4: zeigt schematisch eine bevorzugte Ausführungsform zur Herstellung eines Anodenwickels.

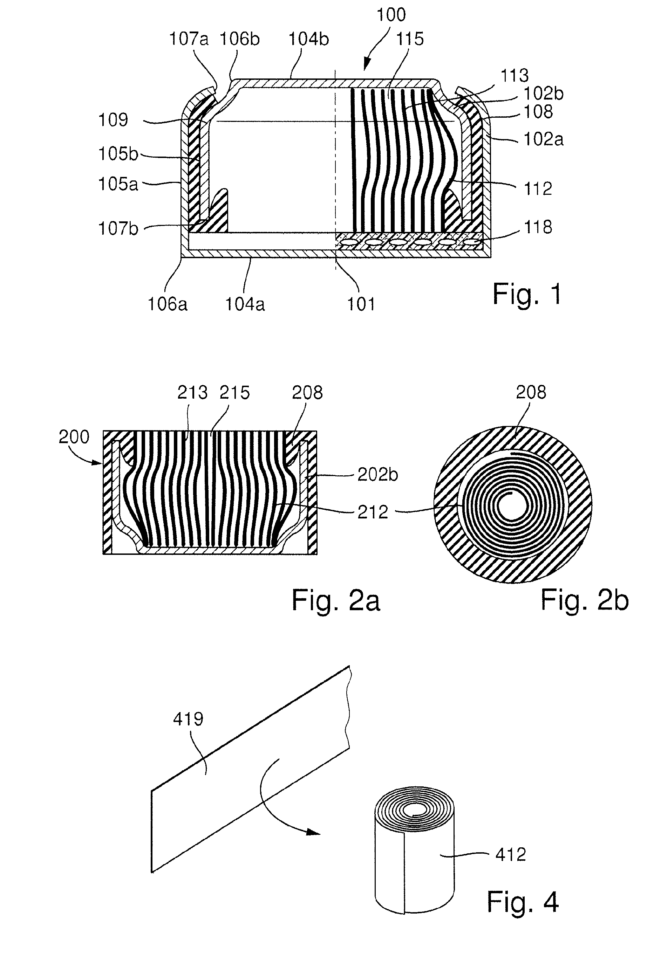

Figur 1 zeigt schematisch eine geschnittene Darstellung einer bevorzugten Ausführungsform eines Gehäuses 101 einer erfindungsgemäßen geschlossenen und bördelfreien Knopfzelle 100 in Form einer Zink-Luft-Knopfzelle.

Die Knopfzelle 100 weist ein metallisches Becherteil 102a und ein metallisches Deckelteil 102b auf.

Das Becherteil 102a weist einen in der Regel kreisförmigen ebenen Boden 104a, einen in der Regel zylinderförmigen Mantel 105a mit einem in der Regel kreisförmigen Querschnitt und einen den Boden 104a und den Mantel 105a verbindenden Randbereich 106a auf. Der Randbereich 106a ist in der Regel in Form einer scharfen Kante ausgebildet. Die Schnittkante 107a bildet den Öffnungsrand des Becherteils 102a.

Das Deckelteil 102b weist ebenfalls einen in der Regel kreisförmigen ebenen Boden 104b, einen in der Regel zylinderförmigen Mantel 105b mit einem in der Regel kreisförmigen Querschnitt und einen den Boden 104b und den Mantel 105b verbindenden Randbereich 106b auf. Der Randbereich 106b ist in der Regel ebenfalls in Form einer scharfen Kante ausgebildet. Die Schnittkante 107b bildet den Öffnungsrand des Deckelteils 102b.

Zwischen dem Becherteil 102a und dem Deckelteil 102b ist eine Dichtung 108 angeordnet, die diese voneinander isoliert. Bei der Dichtung 108 kann es sich um eine Foliendichtung, wie in der DE196 47 593 beschrieben, handeln.

Das Deckelteil 102b ist mit der Schnittkante 107b voran in das Becherteil 102a eingeschoben, so dass der Mantel 105a des Becherteils 102a und der Mantel 105b des Deckelteils 102b bereichsweise überlappen und einen umlaufenden, doppelwandigen Mantelbereich bilden.

Das Becherteil 102a und das Deckelteil 102b sind zum Einen kraftschlüssig miteinander verbunden. Zwischen den beiden Gehäusehalbteilen 102a und 102b und der Dichtung 108 bestehen jeweils Haftkräfte, die einem axialen Auseinandergleiten der beiden Halbteile 102a und 102b entgegenstehen. Darüber hinaus sind die beiden Halbteile 102a und 102b jedoch auch formschlüssig miteinander verbunden. Einem Auseinandergleiten in axialer Richtung stehen nämlich weiterhin das radial nach außen aufgeweitete Segment 109 des Deckelteils 102b und die nach innen umgebogene Schnittkante 107a des Becherteils 102a entgegen.

Da der Außendurchmesser des radial nach außen aufgeweiteten Segments 109 größer ist als der Innendurchmesser des Mantels 105a des Becherteils 102a im Bereich der nach innen umgebogenen Schnittkante 107a, können sich das Becherteil 102a und das Deckelteil 102b in axialer Richtung nur so weit auseinander bewegen, bis das radial nach außen aufgeweitete Segment 109 des Deckelteils 102b auf die nach innen umgebogene Schnittkante 107a des Becherteils 102a trifft. Ein weiteres Auseinandergleiten in axialer Richtung kann dann nur noch unter Deformation des Becherteils 102a und/oder des Deckelteils 102b erfolgen.

Zusammen bilden die oben beschriebenen Komponenten ein Gehäuse 101 mit einem ebenen Bodenbereich 104a (entspricht Boden des Becherteils 102a) und einem dazu parallelen ebenen Deckelbereich 104b (entspricht Boden des Deckelteils 102b) aus. Im Gebrauchszustand bilden diese ebenen Bereiche 104a und 104b vorzugsweise die Pole der Knopfzelle, an denen eine Stromabnahme durch einen Verbraucher erfolgen kann.

Im Inneren der Knopfzelle 100 sind insbesondere enthalten eine Anode 112 eine Kathode 118. Üblicherweise sind die Anode 112 und die Kathode 118 über einen (nicht dargestellten) Separator voneinander beabstandet. Unterhalb der Kathode 118 kann noch ein (ebenfalls nicht dargestelltes) Verteilerpapier angeordnet sein, welches die Verteilung von über im Bodenbereich 104a vorhandene Öffnungen aufgenommener Umgebungsluft entlang der Kathode 118 erleichtert.

Die Anode 112 ist in Form eines Anodenwickels, insbesondere Anodenrundwickels, koaxial in dem Deckelteil 102b enthalten. Die Stirnseiten des Anodenwickels 112 sind orthogonal bzw. im Wesentlichen orthogonal zum Bodenbereich 104a und Deckelbereich 104b ausgerichtet. Bei dem Anodenwickel 112 kann es sich beispielsweise um eine aufgewickelte bzw. aufgerollte Zinkfolie handeln.

Bevorzugt sind die Windungen 113 des Anodenwickels 112 über Spalten 115 voneinander beabstandet. Insbesondere die Spalten 115 enthalten dabei einen Elektrolyten und sorgen aufgrund ihrer Anzahl und Anordnung für eine möglichst homogene Verteilung des Elektrolyten im Anodenwickel 112.

Der Anodenwickel 112 liegt in axialer Richtung in einem gepressten bzw. komprimierten Zustand vor, wodurch er zwischen dem Deckelteil 102b und der Kathode 118 (bzw. dem Separator) eingepresst bzw. eingezwängt ist. Dadurch wird der Anodenwickel 112 dicht an der Kathode 118 (bzw. dem Separator) gehalten und gleichzeitig mit dem Deckelteil 102b als Ableiter kontaktiert. Eine unerwünschte Verrutschung des Anodenwickels 112 innerhalb der Knopfzelle 100 ist somit nicht möglich. Bedingt durch die Verpressung kann der Anodenwickel 112 insbesondere in seinem dem Deckelteil 102b zugewandten Bereich in radialer Richtung Deformationen, insbesondere in Form von Erweiterungen (wie dargestellt), aufweisen.

Figur 2a zeigt schematisch die Seitenansicht eines Teils einer erfindungsgemäßen Knopfzelle 200. Gezeigt ist ein Anodenwickel 212, insbesondere in Form eines Rundwickels, der koaxial in ein metallisches Deckelteil 202b eingepresst ist, und eine Dichtung 208, die das Deckelteil 202b mit einem nicht dargestellten metallischen Becherteil dichtend verbindet. Der Anodenwickel 212 besitzt zwischen seinen Windungen 213 Spalten 215, welche in der Regel mit einem Elektrolyten gefüllt sind. Die Stirnseiten des Anodenwickels 212 sind in Richtung des Deckelteils 202b und des (nicht dargestellten) Becherteils ausgerichtet.

Figur 2b zeigt schematisch die Draufsicht des in Figur 2a dargestellten Teils einer erfindungsgemäßen Knopfzelle 200. Gezeigt ist der Anodenwickel 212 und die Dichtung 208, die eine endständige (nicht dargestellte) Schnittkante des Deckteils 202b bedeckt.

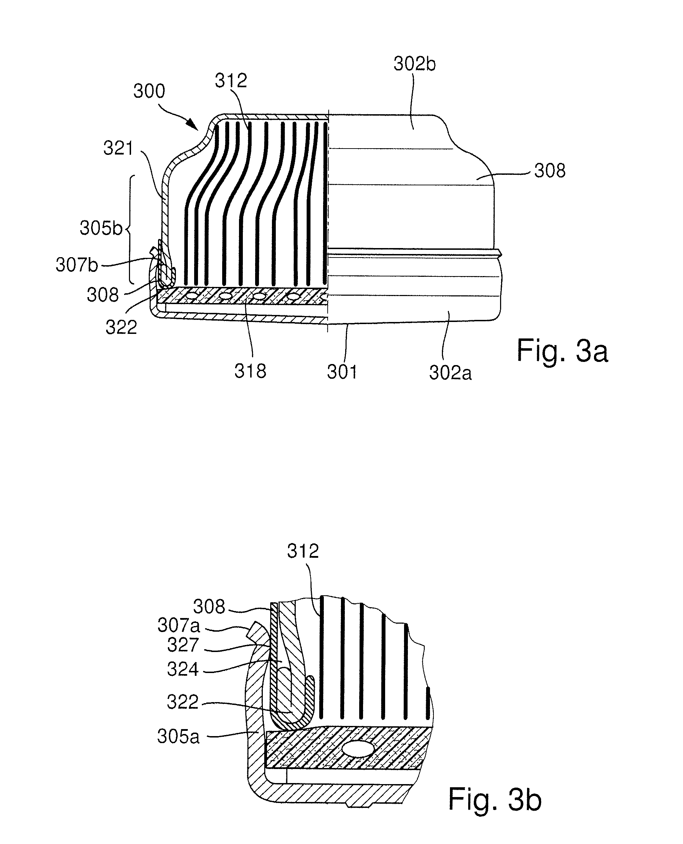

Figur 3a zeigt eine teilgeschnittene Darstellung einer erfindungsgemäßen Knopfzelle 300. Diese umfasst ein Gehäuse 301 aus dem Becherteil 302a, dem Deckelteil 302b und der Dichtung 308. Das Deckelteil 302b weist einen Mantel 305b auf, der sich in einen einwandigen Abschnitt 321 und einen sich daran anschließenden umlaufenden doppelwandigen Öffnungsrand mit U-förmigem Querschnitt 322 unterteilt. Letzterer wurde durch radiales Umbiegen der Schnittkante 307b nach außen gebildet.

Klar zu erkennen ist, dass der doppelwandige Öffnungsrand mit U-förmigen Querschnitt 322 radial nach innen eingezogen ist, so dass der Außendurchmessers des Mantels 305b im Bereich des doppelwandigen Öffnungsrandes 322 den Außendurchmesser des Mantels 305b im einwandigen Bereich 321 nicht überschreitet. Als Resultat des Einzugs weist der Mantel 305b unmittelbar oberhalb des doppelwandigen Öffnungsrandes 322 eine Kerbe 324 auf, in der der Außendurchmesser des Mantels 305b ein Minimum aufweist. Die Kerbe 324 kann dazu genutzt werden, das Becherteil 302a und das Deckelteil 302b formschlüssig miteinander zu verbinden.

Figur 3b zeigt eine ausschnittsweise Vergrößerung des geschnittenen Bereichs in Figur 3a. Gut zu erkennen ist die Kerbe 324, die unterhalb der Schnittkante 307b verläuft. In diese Kerbe greift die Einbuchtung 327 ein. Gebildet ist die Einbuchtung 327 durch radialen Einzug im Mantel 305a des Becherteils 302a. Die Schnittkante 307a des Becherteils 302a selbst ist radial nach außen umgebogen.

Bei der dargestellten Knopfzelle 300 handelt es sich im Übrigen ebenfalls um eine Zink-Luft-Knopfzelle. In das Becherteil 302a eingelegt ist eine Anode 312 in Form eines Rundwickels sowie eine Luftkathode 318. Der Anodenrundwickel 312 liegt innerhalb des Gehäuses axial gepresst vor.

Figur 4 zeigt schematisch eine bevorzugte Ausführungsform zur Herstellung eines Anodenrundwickels 412 ausgehend von einem vorzugsweise streifenförmigen Flachkörper 419. Bei dem Flachkörper 419 handelt es sich vorzugsweise um eine Folie. Der Flachkörper 419 kann ausgehend von einem nicht dargestellten Endlos-Flachkörper, beispielsweise einer Endlos-Folie, durch einfaches Ausschneiden, insbesondere Ausstanzen, bereitgestellt und anschließend zum Rundwickel 412 aufgewickelt bzw. aufgerollt werden.

## Patentansprüche

1. Knopfzelle, umfassend
- zwei metallische Gehäusehalbteile in Form eines Becherteils und eines Deckelteils, die mittels einer elektrisch isolierenden Dichtung von einander getrennt sind und die ein flüssigkeitsdicht verschlossenes Gehäuse mit einem ebenen Bodenbereich und einem dazu parallelen ebenen Deckelbereich ausbilden, sowie
- innerhalb des Gehäuses eine Anode aus Zink oder einem zinkhaltigen Material und eine Kathode,
wobei die Anode in Form eines Wickels ausgebildet ist, dessen Stirnseiten in Richtung des ebenen Bodenbereichs und des ebenen Deckelbereichs weisen, **dadurch gekennzeichnet, dass** der Anodenwickel innerhalb des Gehäuses axial gepresst bzw. komprimiert vorliegt.

2. Knopfzelle nach Anspruch 1, **dadurch gekennzeichnet, dass** der Anodenwickel spiralförmig ausgebildet ist.

3. Knopfzelle nach Anspruch 1 oder 2, **dadurch gekennzeichnet, dass** es sich bei dem Anodenwickel um einen Rundwickel handelt.

4. Knopfzelle nach einem der vorhergehenden Ansprüche, **dadurch gekennzeichnet, dass** der Anodenwickel vorzugsweise koaxial in dem Deckelteil enthalten ist.

5. Knopfzelle nach einem der vorhergehenden Ansprüche, **dadurch gekennzeichnet, dass** der Anodenwickel mittels Aufwickeln eines vorzugsweise streifenförmigen und insbesondere flexiblen Flachkörpers hergestellt ist.

6. Knopfzelle nach Anspruch 5, **dadurch gekennzeichnet, dass** der Flachkörper vor dem Verschluss des Gehäuses eine Breite besitzt, die länger ist als der Abstand zwischen dem Deckelbereich und einer im Bodenbereich angeordneten Kathode, insbesondere einem im Bodenbereich angeordneten Separator, der eine darunterliegende Kathode von dem Anodenwickel beabstandet.

7. Knopfzelle nach Anspruch 6, **dadurch gekennzeichnet, dass** die Breite des Flachkörpers um 0.1 bis 3 %, insbesondere 0.5 bis 2 %, bevorzugt 1 bis 1.5 %, länger ist als der Abstand zwischen dem Deckelbereich und der Kathode, insbesondere dem Separator.

8. Knopfzelle nach einem der vorhergehenden Ansprüche, insbesondere nach einem der Ansprüche 5 bis 7, **dadurch gekennzeichnet, dass** der Anodenwickel, insbesondere der Flachkörper, folienförmig ausgebildet ist bzw. in Form einer Folie vorliegt.

9. Knopfzelle nach einem der vorhergehenden Ansprüche, insbesondere nach einem der Ansprüche 5 bis 8, **dadurch gekennzeichnet, dass** der Anodenwickel, insbesondere Flachkörper, Zinkpulver aufweist, welches insbesondere mittels Pressen oder Sintern vernetzt ist.

10. Knopfzelle nach einem der vorhergehenden Ansprüche, insbesondere nach einem der Ansprüche 5 bis 8, **dadurch gekennzeichnet, dass** der Anodenwickel, insbesondere der Flachkörper, neben Zink ein Binde- bzw. Geliermittel, vorzugsweise beide zusammen in Form einer Zinkpaste, aufweist.

11. Knopfzelle nach Anspruch 10, **dadurch gekennzeichnet, dass** das Binde- bzw. Geliermittel einen Anteil zwischen 0.1 und 5 Gew.-%, insbesondere 0.3 und 2 Gew.-%, bevorzugt 0.5 und 1 Gew.-%, aufweist, bezogen auf das Gesamtgewicht eines elektrolytfreien Anodenwickels oder des Flachkörpers.

12. Knopfzelle nach Anspruch 10 oder 11, **dadurch gekennzeichnet, dass** das Binde- bzw. Geliermittel ausgewählt ist aus der Gruppe bestehend aus Cellulose bzw. Cellulosederivate, insbesondere Carboxymethylcellulose bzw. Carboxymethylcellulosederivate, Polyvinylalkohol (PVA), Dextrine und Mischungen davon.

13. Knopfzelle nach einem der vorhergehenden Ansprüche, insbesondere nach einem der Ansprüche 5 bis 12, **dadurch gekennzeichnet, dass** der Anodenwickel, insbesondere der Flachkörper, ferner einen Träger, insbesondere in Form eines faserförmigen Substrates wie beispielsweise eines Gewebes oder Vlieses oder in Form eines Streckgitters, insbesondere Streckmetalls, vorzugsweise aus Zink, aufweist.

14. Verfahren zur Herstellung einer Knopfzelle, insbesondere nach einem der vorhergehenden Ansprüche, **dadurch gekennzeichnet, dass** aus zwei metallischen Gehäusehalbteilen in Form eines metallischen Becherteils und metallischen Deckelteils ein Gehäuse mit einem ebenen Bodenbereich und einem dazu parallelen ebenen Deckelbereich montiert wird und eine Anode aus Zink oder einem zinkhaltigen Material in Form eines vorzugsweise vorgefertigten Wickels derart in das Gehäuse eingesetzt wird, dass der Wickel nach flüssigkeitsdichtem Verschluss des Gehäuses axial gepresst bzw. komprimiert innerhalb des Gehäuses vorliegt.

15. Verfahren nach Anspruch 14, weiter umfassend die Schritte
- Einsetzen des Anodenwickels in das metallische Deckelteil
- Einsetzen des metallischen Deckelteils mit dem Anodenwickel in das metallische Becherteil,
- ggf. Umbördeln des Randes des Becherteils.
